# EUROPEAN PATENT SPECIFICATION

(11) **EP 2 822 683 B1**
(45) Date of publication and mention of the grant of the patent: **27.04.2016**
(21) Application number: 12708297.2
(22) Date of filing: 06.03.2012
(51) Int. Cl.: B01J 19/32, F25J 3/04

(54) **STRUCTURED PACKING**
STRUKTURIERTE PACKUNG
EMBALLAGE STRUCTURÉ

(43) Date of publication of application: 14.01.2015
(73) Proprietor: Air Products and Chemicals, Inc., Allentown, PA 18195-1501 (US)
(72) Inventor: WILSON, Jonathan, Sale Cheshire M33 3DW (GB); SUNDER, Swaminathan, Allentown, Pennsylvania 18104 (US); HOUGHTON, Patrick Alan, Emmaus, Pennsylvania 18049 (US)
(74) Representative: Beck Greener
(86) International application number: PCT/EP2012/053818
(87) International publication number: WO 2013/131559

(56) References cited:
- EP-A2- 1 036 590
- US-A1- 2005 249 648
- US-A1- 2010 096 249

## Description

The present invention generally relates to structured packing. Structured packing has particular application in heat and/or mass exchange columns, especially in cryogenic air separation processes, although it may be used in other applications, such as heat exchangers, for example.

The term "column" as used herein means a distillation or fractionation column or zone, i.e. a column or zone wherein liquid and vapour phases are countercurrently contacted to effect separation of a fluid mixture, such as by contacting of the vapour and liquid phases on packing elements or on a series of vertically-spaced trays or plates mounted within the column.

A divided wall column is a system of thermally coupled distillation columns. In divided wall columns, at least one dividing wall is located in the interior space of the column. The dividing wall generally is vertical. Two different mass transfer separations may occur on either side of the dividing wall, for example.

The term "packing" means solid or hollow bodies of predetermined size, shape and configuration used as column internals to provide surface area for the liquid to allow heat and/or mass transfer at the liquid-vapour interface during countercurrent flow of two phases. Two broad classes of packings are "random" and "structured".

"Random packing" means packing wherein individual members have no specific orientation relative to each other or to the column axis. Random packings are traditionally small, hollow structures with large surface area per unit volume that are loaded at random into a column.

"Structured packing" means packing wherein individual members have specific orientation relative to each other and to the column axis. Structured packings usually are made of thin metal foils stacked in layers.

In processes such as distillation, it is advantageous to use structured packing to promote heat and/or mass transfer between counterflowing liquid and vapour streams. Structured packing, when compared with random packing or trays, offers the benefits of higher efficiency for heat and/or mass transfer with lower pressure drop. It also has more predictable performance than random packing.

The separation performance of structured packing is often given in terms of height equivalent to a theoretical plate (HETP), which is the height of packing over which a composition change is achieved that is equivalent to the composition change achieved by a theoretical plate. The term "theoretical plate" means a contact process between gaseous and liquid phases such that the existing gaseous and liquid streams are in equilibrium. The smaller the HETP of a particular packing for a particular separation, the more efficient the packing, because the height of the packing bed being used decreases with HETP.

Cryogenic separation of air is carried out by passing liquid and vapour in countercurrent contact through a distillation column. A vapour phase of the mixture ascends with an ever increasing concentration of the more volatile components (e.g., nitrogen) while a liquid phase of the mixture descends with an ever increasing concentration of the less volatile components (e.g., oxygen). Various packings or trays may be used to bring the liquid and gaseous phases of the mixture into contact to accomplish mass transfer between the phases.

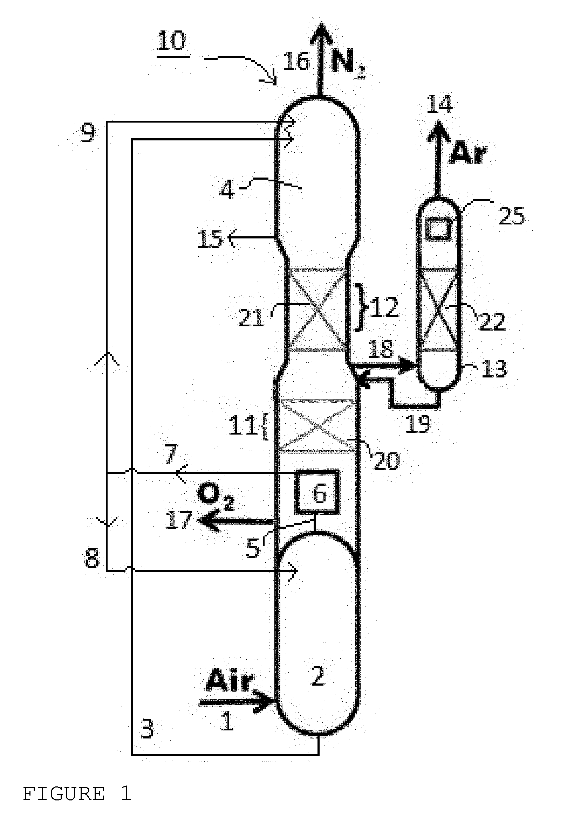

There are many processes for the separation of air by cryogenic distillation into its components (i.e. nitrogen, oxygen, argon, etc.). A typical cryogenic air separation unit 10 is shown schematically in Figure 1. High (or higher) pressure feed air 1, typically at a pressure of from 2 to 10 bar (200 to 1000 kPa), is fed into the base of a high (or higher) pressure distillation column 2. Within the high pressure column 2, the air is separated into nitrogen-enriched overhead vapour and oxygen-enriched bottoms liquid. The oxygen-enriched bottoms liquid stream 3 is fed from the high pressure distillation column 2, after suitable pressure reduction (not shown), typically to a pressure of from 1.1 to 2 bara (110 to 200 kPa absolute), into a low (or lower) pressure distillation column 4. Nitrogen-enriched vapour stream 5 is passed into a condenser 6 where it is condensed to provide reboil to the low pressure column 4. The nitrogen-enriched liquid stream 7 is partially returned via stream 8 as reflux to the top of high pressure column 2, and is partially fed via stream 9 into the top of low pressure column 4 as liquid reflux.

Low pressure column 4 consists of a lower section 11, in which is placed structured packing 20, and upper narrower section 12 in which is placed structured packing 21. A separate low pressure column 13, also known as an auxiliary or sidearm column, comprising structured packing 22 is provided for production of an argon-enriched stream 14.

In the low pressure column 4, the streams 3 and 9 are separated by cryogenic distillation into oxygen-rich and nitrogen-rich components. Structured packings 21 and 20 may be used to bring into contact the liquid and gaseous phases of the oxygen and nitrogen to be separated. The nitrogen-rich overhead component is removed as a vapour stream 16. The oxygen-rich bottoms component is removed as a liquid stream 17. Alternatively the oxygen-rich component can be removed from a location in the sump surrounding reboiler/condenser 6 as a vapour. A waste stream 15 also is removed from the low pressure distillation column 4.

Feed stream 18 is removed from an intermediate point between lower section 11 and upper section 12 of low pressure column 4 and is passed to column 13. A condenser 25 is provided in the upper portion of column 13 to generate a reflux from the feed stream 18. Passage of this feed stream in countercurrent flow with reflux from condenser 25 through structured packing 22 creates an argon-enriched overhead vapour stream 14, and oxygen-enriched bottoms liquid stream 19 which is returned to the low pressure column 4 above structured packing 20 and below structured packing 21 as reflux.

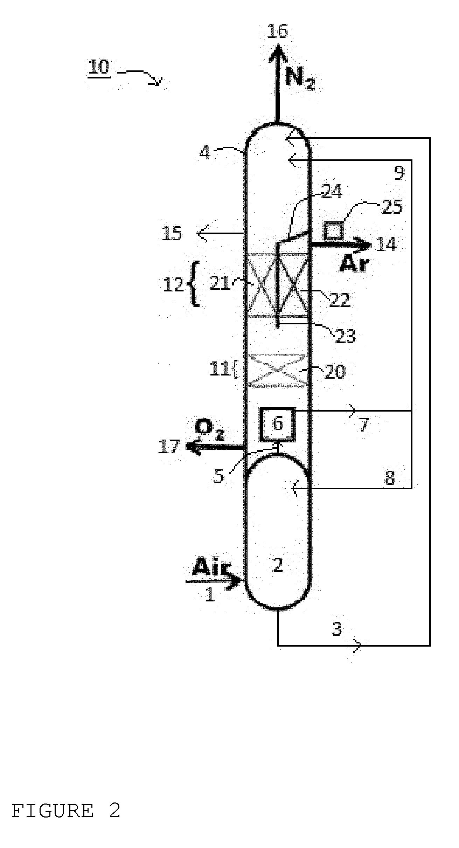

Figure 2 shows an alternative arrangement for cryogenic distillation of air to provide nitrogen, oxygen and argon, in which a divided low pressure column is used in place of the separate column 13 for argon production in Figure 1. Such an arrangement is described in, for example, U.S. Patent No. 6,240,744 (Agrawal et al.). Features in common with the arrangement in Figure 1 have the same reference numbers. In this arrangement, the vapour stream leaving the top of structured packing 20 at the lower end of low pressure column 4 is divided into two portions, of which the first rises to the structured packing 21 and the second rises to the structured packing 22 which is divided from the structured packing 21 by dividing wall 23 and from the upper part of low pressure column 4 by end wall 24. In the Figure, the dividing wall is shown as a flat wall centrally mounted in the low pressure column 4, such as to divide the column 4 along its diameter into two equally sized sections of semi-circular cross section; however, as explained in U.S. Patent No. 6,240,744, many other arrangements for the separation of structured packing 22 from structured packing 21 are possible. The vapour portion entering structured packing 21 is separated into a nitrogen-rich overhead vapour stream and an oxygen-rich bottoms liquid stream as described for Figure 1. The vapour portion entering structured packing 22 is separated into an argon-enriched overhead vapour stream 14 and an oxygen-enriched bottoms liquid, as described for column 13 in Figure 1, but without requiring the additional expense and complication of providing the second column 13. Further, with the arrangement of Figure 2 it is not necessary to adapt low pressure column 4 by the narrowing depicted in Figure 1 to compensate for the withdrawal of vapour from column 4 to pass to column 13 in order that the mass transfer performance of column 4 is maintained despite the reduced vapour flow in the upper section 12 compared with lower section 11.

Other prior art relating to the structure of columns used in cryogenic distillation of air includes:
US5,339,648 (Lockett et al.), which describes a distillation system suitable for air separation that uses a partitioned column section with packing and/or trays wherein three separate product streams may be withdrawn from the partitioned column;
US5,946,942 (Wong et al.), which describes the use of an annular column comprising coaxial radially spaced cylindrical columns with packing and/or trays for rectifying different cryogenic fluid mixtures in the first and second column regions;
EP1162423 (Messer AGS GmbH), which describes the separate rectification of an argon-oxygen mixture using recycled liquid from the crude argon column in the low pressure column;
US2006/0005574 (Glatthaar et al.), which describes a process for recovering argon in a cryogenic air separation process by using a vertical partition that separates the packed column into a first and second sub-section;
US7,357,378 (Zone et al.), which describes the arrangement of structured packing in a divided wall column such that disturbances to the heat/mass transfer process are minimised where stiffeners are used to mechanically support the divided wall;
US6,250,106 (Agrawal et al.), which describes a multi-zone distillation column that has at least two vertical partitions creating a primary and at least two secondary distillation zones;
US2006/0260926 (Kovak), which describes the assembly of radial crossflow distillation trays for application in a divided wall column;
US2010/0096249 (Kovak) describes a divided exchange column into which trays or structured packing are placed. The document discloses division of the column into two sections by a chord wall (both equal and unequal divisions are contemplated) and also division of the column into three sections by means of radial walls intersecting at the centre of the cylindrical column; and
US5,669,236 (Billingham et al.), which describes the use of an additional rectifying section in parallel with the lower section of the lower pressure column for producing product oxygen at low and high purity.

None of the prior art known to the inventors considers in detail the nature of the structured packing required to obtain an optimal result in columns that are not circular in cross-section but have a cross-section having at least one pair of converging walls or wall portions, such as those including at least one corner or angle in their cross-section, such as divided columns. The prior art instead simply discusses the generic use of any structured or random packing and/or trays in partitioned or divided wall columns.

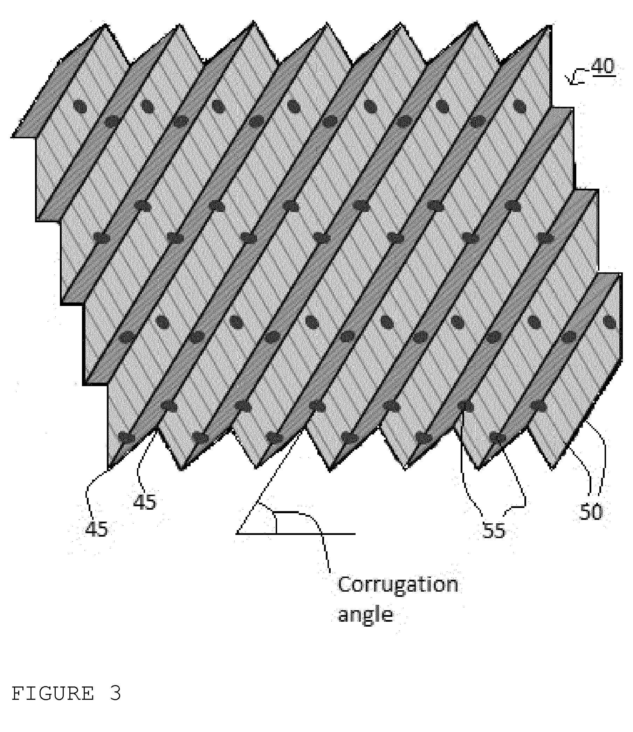

Structured packing is defined in the present invention as a thin metal or plastic foil that has been perforated, fluted and corrugated to meet specific requirements for its intended application. A representation of a typical structured packing is shown in Figure 3, in which is shown a foil 40 which is corrugated by folding along fold lines 45, and which has a pattern of fluting, that is, depressions and/or elevated areas 50 in the form of horizontal striations, formed for example by embossing the foil 40, and a pattern of perforations, or through holes, 55. The perforations 55 and the texture formed by elevated/depressed areas 50 aid liquid/vapour spreading on the surface of foil 40, thus improving the heat and mass transfer efficiency of the packing. Typically, the surface area of the foil occupied by the perforations is from 5% to 20%. Typically, the fluting may be in the form of horizontal striations, or a bidirectional surface texture in the form of fine grooves in crisscrossing relation.

Within a layer of structured packing in a column, multiple foils are oriented vertically (that is to say, with the plane of the foil substantially parallel to the axis of the column), with adjacent foils having their corrugations oriented transversely (that is to say, if a first foil has its corrugations running from bottom left to top right, an adjacent foil will be oriented such that its corrugations run from bottom right to top left). Such an arrangement is depicted in Figure 3 of US4,296,050 (Meier). It is conventional to rotate successive layers of structured packing, typically by an angle of 90° about the column axis with respect to the underlying layer, in order to improve the flow characteristics. Such an arrangement is shown in Figure 4 of US4,296,050 (Meier). However, each rotation increases the pressure drop through the column comprised of the packing.

EP1036590 (Sunder et al.) describes optimum ranges of several packing parameters, e.g. a surface area density of from 350 to 800 m²/m³, a corrugation angle (i.e. the angle between the horizontal and the longitudinal axis of the corrugation when the packing element is vertical in the column) of from 35 to 65°, and open area of perforations from 5 to 20%. There is no discussion in this document of the use of divided wall columns or non-cylindrical columns.

US5,876,638 (Sunder et al.) and US5,901,575 (Sunder) also discuss developments in structured packing.

It is an aim of the present invention to provide a structured packing that is optimised for use in a column whose cross-section is not wholly rounded, that is, a column whose cross-section has at least one pair of converging walls or wall portions, such as a divided wall column in which the division creates at least one corner or angle within the column. It is an aim of the present invention to provide a structured packing that is optimised for use in such a column in a cryogenic distillation apparatus, in particular one used in the separation of components of air.

Accordingly, in a first aspect, the present invention provides the use in a cryogenic separation process of structured packing having a corrugation angle of at least 50° in a column or column division having at least one pair of converging walls or wall portions within at least a region of the column or column division bounded by, or lying between, at least one pair of converging walls or wall portions.

In a second aspect, the present invention provides an apparatus for a cryogenic separation process, comprising a column or divided column having at least one pair of converging walls or wall portions and, within at least a region of the column or divided column bounded by, or lying between, at least one pair of converging walls or wall portions, a structured packing having a corrugation angle of at least 50°.

In a third aspect, the present invention provides a method of cryogenic separation comprising supplying one or more fluids to a column or column division having at least one pair of converging walls or wall portions and which, within at least a region of the column or divided column bounded by, or lying between, at least one pair of converging walls or wall portions, contains a structured packing having a corrugation angle of at least 50° such that the one or more fluids contact the structured packing in order to effect heat transfer and/or mass transfer.

In the context of the present invention, a column division is a part of a column physically separated from the remainder of the column by at least one dividing wall arranged substantially to co-extend with the longitudinal axis of the column. That is, where the column has its longitudinal axis positioned vertically, as is usual in use, the or each column division is created by the presence of a substantially vertical wall within the column that physically segregates a part of the column volume from the remainder, such as to prevent the mixing of fluid present in the column division with fluid present in the remainder of the column over the vertical distance over which the dividing wall extends.

It is believed by the present inventors that the presence of at least one pair of converging walls or wall portions, and in particular the presence of an angle or corner, in the cross-section of a column or column division restricts the mixing of fluid within the column in an edge zone close to the column or column division wall, resulting in reduced efficiency of mass transfer and/or heat transfer within the column where a structured packing optimised for use in a cylindrical column is used. The present invention provides benefit in terms of cost savings and increased efficiency of mass transfer by use of a structured packing optimised for use in a column or column division having at least one pair of converging walls or wall portions, which optimisation has not previously been considered necessary.

In a fourth aspect, the present invention provides a method of upgrading an apparatus for a cryogenic separation process, which apparatus comprises a column or column division whose cross-section comprises at least one pair of converging walls or wall portions and which contains a structured packing having a corrugation angle of less than 50°, comprising the steps of:
removing the structured packing having a corrugation angle of less than 50° from at least a region of the column or column division bounded by, or lying between, the at least one pair of converging walls or wall portions, and
replacing the structured packing having a corrugation angle of less than 50° with a structured packing having a corrugation angle of at least 50°.

Preferably, the structured packing having a corrugation angle of 50° or more has a corrugation angle of 55° or more.

In a fifth aspect, the present invention provides a method of installation of structured packing into an apparatus for a cryogenic separation process, which apparatus comprises a column or column division having at least one pair of converging walls or wall portions, comprising the steps of:
providing a structured packing having a corrugation angle of at least 50°, and
installing the said structured packing into at least a region of the column or column division bounded by, or lying between, at least one pair of converging walls or wall portions.

The following preferred features apply to all aspects of the invention, where appropriate, and may be combined.

Preferably, the corrugation angle of the structured packing used in the present invention is between 50° and 70 °, more preferably between 55 ° and 65 °, and is most preferably 60 °.

The term "at least one pair of converging walls or wall portions" describes the situation wherein column walls, or parts of column walls, approach each other increasingly closely. The walls or parts of walls need not intersect or contact one another as a result of their convergence, but may intersect or contact one another to form an angle or corner in the cross-section of the column.

Suitably, the structured packing is used across the whole of the cross-sectional area of the said column or column division, and not only in a region bounded by, or lying between, at least one pair of converging walls or wall portions.

Preferably, the column or column division comprises at least one internal angle of less than or equal to 120 ° in its cross-section, more preferably less than or equal to 100 °, such as less than or equal to 90°. It is believed that the disruption to mixing within the edge zone increases with the acuteness of the angle or angles present in the cross-section of the column or column division, and so greater benefit is obtained for the present invention where the angle or angles are more acute.

Suitably, the column or column division cross-section may be an irregular cross-section which includes a corner or angle, or may be an irregular or regular polygon, or may be a figure formed by the intersection of a chord with a circle or other rounded shape resulting in one or more angles or corners. For example, the column or column division may be of hexagonal, pentagonal, square, rectangular, triangular, semicircular, part-circular, or quarter-circular cross-section. Again, it is expected that the benefits of the invention will be greater the more acute the angle or angles present in the cross-section.

The column or column division may comprise one, two, three, four, five, six or more angles or corners. It is expected that the benefit of the invention will increase with the number of angles present that are able to disrupt mixing. Preferably, at least one, and more preferably all, of the angles are 120° or less, such as 100° or less, more preferably 90° or less, such as 70° or less.

Preferably, the invention is applied to a column division formed by providing at least one dividing wall within the column which is in contact with the outer wall of the column in at least one place. Preferably, the column which is to be divided has a circular cross-section, and at least one of the divisions of the column thus formed has a non-circular cross-section which comprises at least one angle or corner. Suitably, the column may be divided into more than two divisions, such as three, four, five, six, ten or twenty divisions, by an appropriate number of dividing walls, which may intersect each other and/or the column wall to form the required number of divisions. The dividing walls may be the same as one another or may take different forms, and may individually form a straight line or a curved line within the cross-section of the column to be divided. The dividing walls may be the same lengths or different lengths, and the divisions formed may be regular or irregular shapes or polygons, and may be of the same or different cross-section and/or cross-sectional area as one another. These parameters can be selected depending on the intended use of the divided column.

Preferably, however, the column is divided into two divisions by a single dividing wall. Where the column which has been divided has a circular cross-section, preferably the dividing wall is a chord wall. Where the column to be divided is not circular in cross-section, the column is preferably divided by a dividing wall that extends across the cross-section of the column such that each end of the dividing wall intersects the column wall in different places. In either case, the cross-sectional areas of the column divisions may be selected according to the required flow of fluid through each column division. Suitably, where the flow through each division is to be equal, the column divisions are of equal cross-sectional area, and, in this case, where the column which has been divided has a circular cross-section, the column divisions are of semi-circular cross-section.

Preferably, the structured packing has a surface density of from 350 to 800 m²/m³. Preferably, the fluting of the structured packing is in the form of horizontal striations. Preferably, the open area of the perforations is in the range of from 5 to 20%.

Preferably, the column size is greater than 0.5 m in diameter, such as greater than or equal to 0.9 m in diameter, more preferably greater than or equal to 1 m in diameter, where the column is of circular cross-section, or is of greater than the equivalent cross-sectional areas (that is, greater than 0.196 m², greater than or equal to 0.64 m², and greater than or equal to 0.79 m² respectively) where the cross-section is of another shape.

Preferably, the maximum column diameter is 15 m, such as 10 m, 9 m, 8 m, 7 m, 6 m, 5 m, or 4 m, for a column of circular cross-section. Again, where the column cross-section is of another shape, the maximum column size is of the corresponding maximum cross-sectional area, that is, 177 m², 78.5 m², 63.6 m², 50.3 m², 38.5 m², 28.3 m², 19.6 m², or 12.6 m² respectively.

The invention is applied in a cryogenic separation process, such as a cryogenic air separation (cryogenic distillation) process, which includes, but is not limited to, the separation of air into nitrogen-enriched, oxygen-enriched and argon-enriched streams. Thus, it may be applied to the cryogenic separation of air into nitrogen- and oxygen-enriched streams. Suitably, the invention is applied to the cryogenic separation of air into oxygen- and argon-enriched streams.

### Brief Description of the Figures

Figure 1 shows a schematic representation of a known arrangement for the cryogenic distillation of air.
Figure 2 shows a schematic representation of a known arrangement for the cryogenic distillation of air, in which a divided wall (partitioned) column is used.
Figure 3 shows a schematic representation of structured packing.
Figure 4 shows a schematic representation of the longitudinal axes of corrugation in structured packing when placed in a column.
Figure 5 shows in plan view the appearance of structured packing in (a) a column having a circular cross-section, and (b) a column having a semi-circular cross-section.
Figures 6 to 15 illustrate plan views of examples of column arrangements to which the present invention is applicable.
Figure 16 shows the results obtained for a prior art structured packing when used in a column having a circular cross-section and a column having a semi-circular cross-section in terms of HETP.
Figure 17 shows the results obtained for a prior art structured packing when used in a column having a circular cross-section and a column having a semi-circular cross-section in terms of pressure drop.
Figure 18 shows the results obtained for a structured packing according to the present invention when used in a column having a circular cross-section and a column having a semi-circular cross-section.
Figure 19 shows the results obtained in terms of pressure drop for a structured packing according to the present invention when used in a column having a circular cross-section and a column having a semi-circular cross-section.

### Detailed Description

The present invention is applicable to columns in which, in the plan view of the column, there are at least one pair of converging walls or wall portions, such as where one or more dividing walls create angles or corners, or such as where the cross-section is not wholly rounded but instead has at least one angle or corner. It is believed by the present inventors that the advantages of the present invention in terms of separation efficiency are obtained for all such columns.

When designing an optimum structured packing for a particular column, the skilled person is aware that a number of "trade-offs" are used in determining the best overall parameters. For example, the mass transfer efficiency and pressure drop are found to be higher for a corrugation angle of 45° than for a corrugation angle of 60°, whereas the operating capacity is lower for a 45 ° than 60° corrugation angle; these effects must be balanced in order that the chosen packing exhibits acceptable mass transfer efficiency, pressure drop and operating capacity for a particular column.

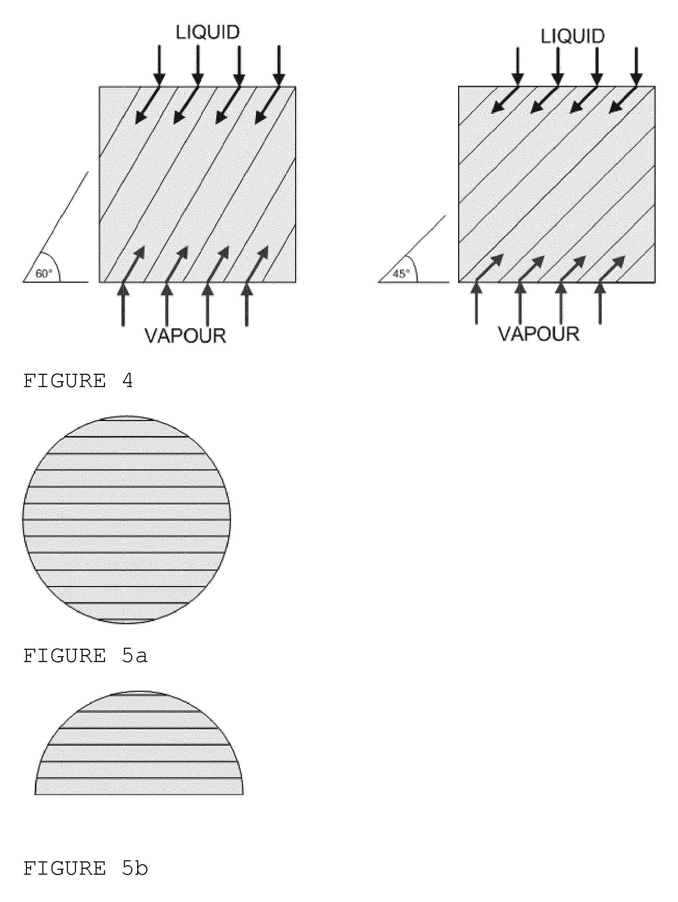

When passing through structured packing in a column, fluid flows mainly along the channels formed by the corrugations in the foil. Part of this fluid flowing in these channels mixes with the fluid flowing in the adjacent criss-crossing channels which are in a transverse diagonal direction as explained above. Also due to the presence of apertures in the foil, some of the fluid mixes with fluid flowing through adjacent channels. Fluid mixing in these ways is important to correct any composition imbalance that may develop within a cross-section of a distillation column, and is a significant factor in the separation efficiency of the column. It can be seen from Figure 4 that a 45 ° angle provides a longer lateral distance compared with a 60 ° angle within the column for the fluid to travel in each layer of structured packing, and thus this provides a larger area for mixing of fluid from separate channels to take place within each layer of structured packing.

EP1036590 teaches an optimum corrugation angle of 35°-65° for cylindrical columns. Within this range it is a common industrial practice to use packings with a corrugation angle of 45° to provide the trade off of parameters such as mass transfer efficiency, pressure drop and operating capacity as described above for a particular cylindrical column.

The present inventors are aware of no prior art in which is discussed the optimisation of structured packing for either non-cylindrical columns or divided columns in which there is at least one pair of converging walls or wall portions, or in which it is disclosed or suggested that the optimal parameters for structured packing for use in either non-cylindrical columns or divided columns in which there is at least one pair of converging walls or wall portions are different from those for conventional cylindrical columns. However, the present inventors have surprisingly discovered that the optimum packing for a divided column or a column in which there is at least one pair of converging walls or wall portions is different from that for a column of circular cross-section. It is believed that this difference is due to the difference in mixing behaviour of fluids in the column at the "edge zone", explained below, for the two types of column.

It has surprisingly been found by the present inventors that the use of a corrugation angle of 60 ° in a column or column division in which the cross-section has at least one pair of converging walls or wall portions provides the same separation efficiency as the use of the same packing in a cylindrical column. However, use of packing having a corrugation angle of 45 ° in a column or column division in which the cross-section has at least one pair of converging walls or wall portions results in significant degradation of the separation efficiency compared with the same packing used in a cylindrical column.

In a cylindrical column, fluid can flow freely within the annular edge zone close to the column wall. The edge zone is the lateral distance from the column wall in which a corrugation channel in the structured packing will end at the wall rather than at the structured packing in the layer above or the layer below. It is calculated as (layer height of the structured packing)/(tan [corrugation angle]). A typical layer height for such structured packing is 200 mm, and with a corrugation angle of 45 ° an annular edge zone of 200 mm would be present within which mixing may take place. However, in a column or division of a column where at least one pair of converging walls or wall portions is present, fluid instead tends to accumulate in the region in which the walls or wall portions converge, and so thorough mixing and composition balancing of the fluids in these regions does not take place. As a result, column performance in terms of separation efficiency is impaired compared with an equivalent cylindrical column.

Without wishing to be bound by theory, one possible explanation by the present inventors is that the maintenance of the separation efficiency for the 60 ° corrugation angle packing is as a result of a smaller edge zone close to the wall of the column or column division formed when using structured packing having a corrugation angle of 60 ° compared with that observed for a structured packing having a corrugation angle of 45 °. As a result, the expected increase in composition imbalance due to poor mixing of fluids in the region in which the walls or wall portions converge is significantly reduced or avoided completely, and so separation efficiency is maintained compared with use of the same packing in a cylindrical column.

Accordingly, the optimum structured packing corrugation angle for use in a column or column division in which the cross-section has at least one pair of converging walls or wall portions is different from the angle in the prior art for cylindrical columns. None of the prior art of which the inventors are aware discusses any possible difference in the performance of structured packing in columns of different cross-section, despite the widespread use of divided columns in the distillation industry for over 50 years.

The finding that separation efficiency does not degrade at a corrugation angle of 60 ° for a column or divided column having at least one pair of converging walls or wall portions relative to a more commonly used angle of 45° permits advantage to be taken of the higher operating capacity of 60 ° corrugation angle packing - i.e. the "trade-off" for this column unexpectedly shifts in favour of a corrugation angle of 60 °. This is of particular benefit in a system such as that depicted in Figure 2, in which a divided column is used, as the higher operating capacity and cost benefits of such a system can be obtained with the present invention without requiring a 30-50% addition to the height of the divided column to compensate for the poorer mass transfer characteristics of that column when used in conjunction with a conventional 45° corrugation angle structured packing.

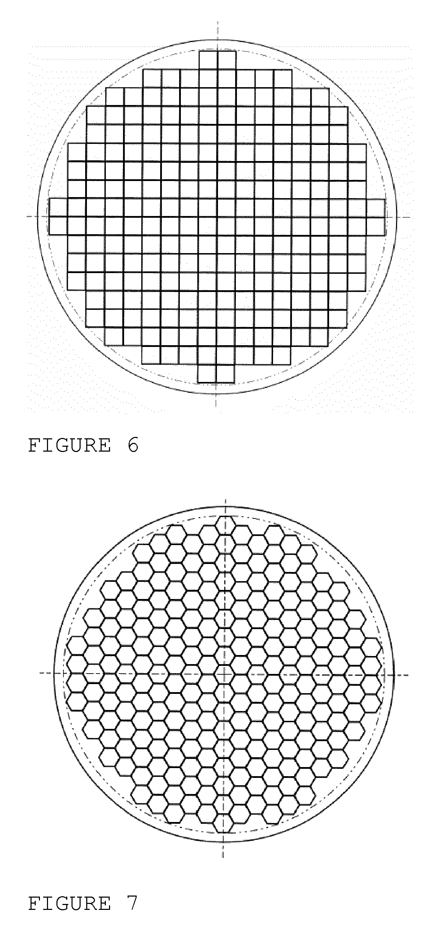

Examples of columns to which the present invention is applicable are shown in Figures 6-15. It will be appreciated by the skilled person that these are merely examples, and that other column cross-sections or divided wall column arrangements are possible to which the invention will equally apply.

Figure 6 shows a column in plan view that has been divided by a plurality of intersecting dividing walls into a number of column zones each with a square cross-section. Figure 7 shows a column in plan view that has been divided by a plurality of intersecting dividing walls into a number of column zones each with a hexagonal cross-section. It will be appreciated that other arrangements of tessellating polygonal column zone cross-sections may be used. Equally, it will be appreciated that the benefits of the present invention will be obtained with the use of a single column having a polygonal cross-section. It is expected that the benefits of the invention will be greater for the use of square or rectangular cross-section columns, such as those shown in Figure 6, than for hexagonal columns such as those shown in Figure 7, as the angles formed between the column walls are more acute for the square or rectangular columns, and so the effect of the angles in creating edge zones in which fluid mixing is reduced is expected to be greater. The closer to circular is the cross-section of the column or column division, the less the benefit of the present invention will be obtained.

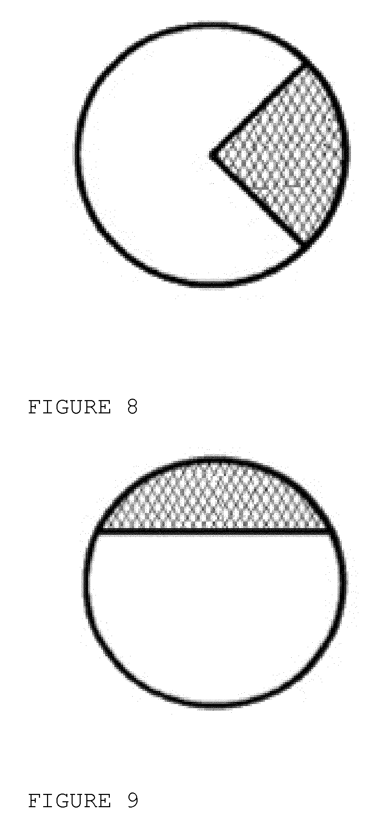

Figure 8 shows a column in plan view in which two dividing walls each span the radius of the circular cross-section of the column in order to divide one-quarter of the area of the cross-section from the remaining three-quarters. An angle or corner of 90° is formed at the middle of the cross-section of the column, and at the intersections of the dividing walls with the circumference of the column the dividing walls are perpendicular to a tangent to the column wall at the point of intersection. It is anticipated that the benefit of the invention will be obtained in both of the column divisions thus formed. In the smaller division, the angles between the two dividing walls and between each dividing wall and the circular column wall are expected to restrict fluid mixing significantly. Similarly, the angles formed between each dividing wall and the circular column wall in the larger division are expected significantly to reduce column mixing; the reflex angle at the junction of the two dividing walls at the centre of the column may also affect fluid mixing, but this is expected to be to a much lesser extent than that observed at the acute angles at the circular column wall.

Again, it will be appreciated that other arrangements of two dividing walls are possible in which a larger or smaller angle is formed between the two dividing walls.

Figure 9 shows a column in which a dividing wall which is a chord of the circular cross-section of the column splits the column cross-sectional area into two unequal parts. An angle or corner is formed at each end of the dividing wall where it intersects the circumference of the column. It is expected that the advantages of the present invention will be obtained in both of the divisions of the column, but that a greater degree of advantage will be obtained for the smaller division, as the more acute angles formed between the circular column wall and the dividing wall are expected to more significantly retard fluid mixing close to these corners.

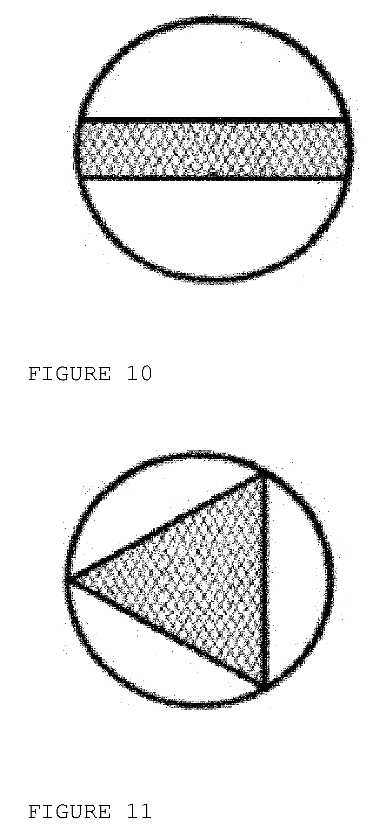

Figure 10 shows a column having two dividing walls that are chords of the circular cross-section of the column, which in this case are placed parallel to one another to define three regions within the column: two sectors and an area between the sectors crossing the centre of the column which is close to rectangular in cross-section. Again, angles or corners are formed where the chords intersect the circumference of the column. The benefit of the present invention is expected to be greater for the two sector divisions, having more acute angles formed at the junctions between the dividing wall and the circular column wall, than the centre division, although all three areas are expected to derive some benefit from the invention.

Figure 11 shows a column having three dividing walls that are chords of the circular cross-section of the column, and which each intersect an adjacent dividing wall at the point where they intersect the circumference of the column such that they define a column region of triangular cross-section in the centre of the column. Angles or corners are formed at each point of intersection. It will be appreciated that alternative arrangements are possible in which the walls need not intersect one another when intersecting the circumference (that is, a number of sectors may be formed whose dividing walls do not intersect with one another), and that more than three dividing walls may be provided that are chords to the circumference of the column. It is expected that the benefit of the present invention would be obtained for all of the divisions of this column.

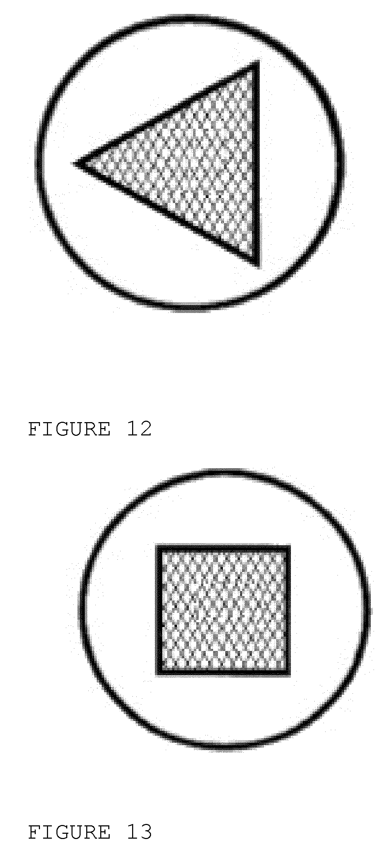

Figure 12 shows a column in which the dividing walls do not intersect the column wall but define a region of triangular cross-section within the column. Similarly, Figure 13 shows an arrangement where the dividing walls enclose a region of square cross-section within the column without any of the dividing walls intersecting with or contacting the column wall. It will be appreciated that more walls may be provided to enclose regions having different polygonal cross-sections. Also, one or more of the dividing walls may intersect with the circumference of the column, and the walls may be of different lengths, thus resulting in a central region of irregular polygonal cross-section. It is expected that the benefit of the present invention will be obtained in both areas formed by the column division, as fluid mixing will be restricted both by the converging walls in the outer division and the angles formed by the intersecting walls of the inner division, but that the benefit will be greater for the inner division than the outer division. The benefit obtained by the triangular central area in Figure 12 is expected to be greater than that obtained for the square inner area in Figure 13 due to the more acute angles of the column in the former case.

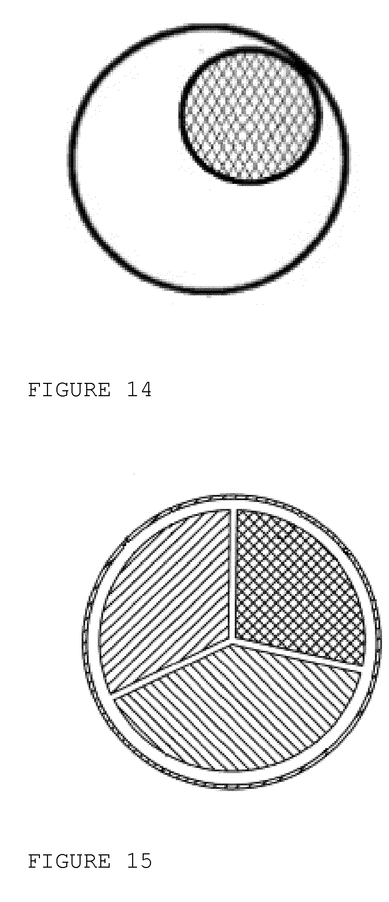

Figure 14 shows a column in which a dividing wall encloses a region having circular cross-section, which dividing wall contacts the circumference of the column. Thus, the dividing wall and the column circumference converge to form angles at the point of contact between the dividing wall and the column circumference. It will be appreciated that the dividing wall need not enclose a circular area but may form any generally rounded shape. It will also be appreciated that the dividing wall need not contact the column wall, but must be arranged such that at least a part of the dividing wall and at least a part of the column wall converge. It is expected in this case that the benefit of the present invention will be obtained only in the outer column division, as the inner column division is of circular cross section, whereas the acute angles formed by the contact between the column wall and the dividing wall will have a restrictive effect on fluid mixing in the outer column section.

Figure 15 shows a column in which three dividing walls extend radially from the centre of the column to the circular column wall, thus dividing the cylindrical column into three equal segments. The benefit of the present invention is expected to be obtained for all of the segments due to the restricted fluid mixing caused in the corners of each segment.

### Examples

A comparison of the performance of structured packing according to the prior art with structured packing according to the invention was conducted in a cryogenic distillation apparatus including either a column with a D-shaped cross-section or a column with a circular cross section for the separation of argon from oxygen. For the column with a circular cross section, approximately 20 layers of packing, where each layer of packing is approximately 210 mm in height and 900 mm in diameter, are stacked on top of each other at 90° orientations inside a cryogenic distillation column. For the column with a D-shaped cross-section, approximately 20 layers of packing, where each layer of packing is approximately 210 mm in height and has a 900 x 450 mm semi-circular area, are stacked on top of each other at 90° orientations inside a cryogenic distillation column. All the comparisons were conducted under total internal reflux at a column pressure of 0.4 barg (40 kPa gauge). The separation of binary mixtures of Argon/Oxygen were studied by measuring the composition of the liquid and vapour streams entering and leaving the column to ascertain the mass transfer efficiency and pressure drop. Both structured packings used conform to the general type shown in Figure 3, with horizontal striations, open area of perforations of about 10%, and each has a surface area of approximately 500 m²/m³. The structured packings differ in their corrugation angle, which is 45° in the case of the prior art packing (Packing A) and 60° in the case of the packing according to the invention (Packing B). The performance is presented in terms of the HETP and the measured dynamic pressure drop through both packings, both of which are presented as functions of Kᵥ, the density corrected superficial gas velocity, which is defined as:

Kᵥ = U[(ρᵥ/ρ_{L}-ρᵥ) ^{0.5}], wherein U = superficial velocity of the vapour phase in the column in m/s; ρᵥ = density of the vapour phase in the column in kg/m³; and ρ_{L} = density of the liquid phase in the column in kg/m³. The values of HETP, Kᵥ and pressure drop have been normalised in order to compare the performance of the packings in the two different forms of columns used.

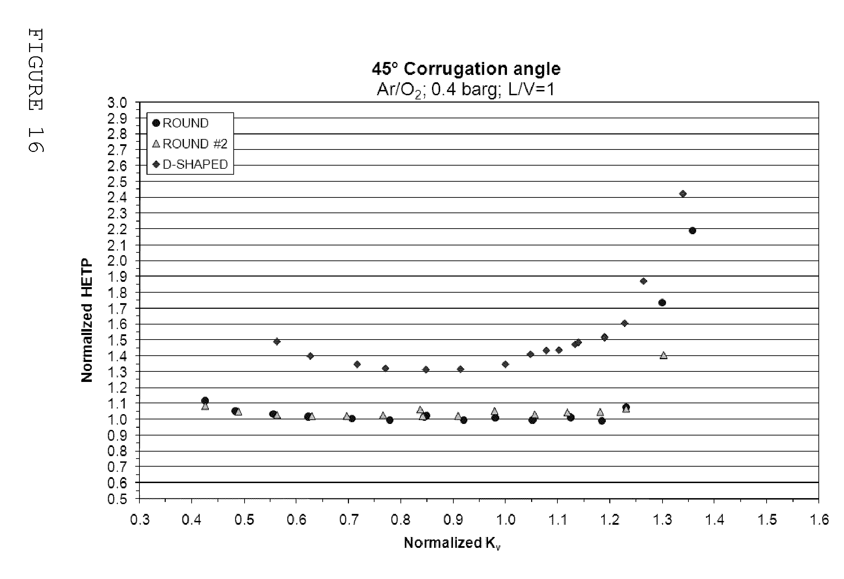

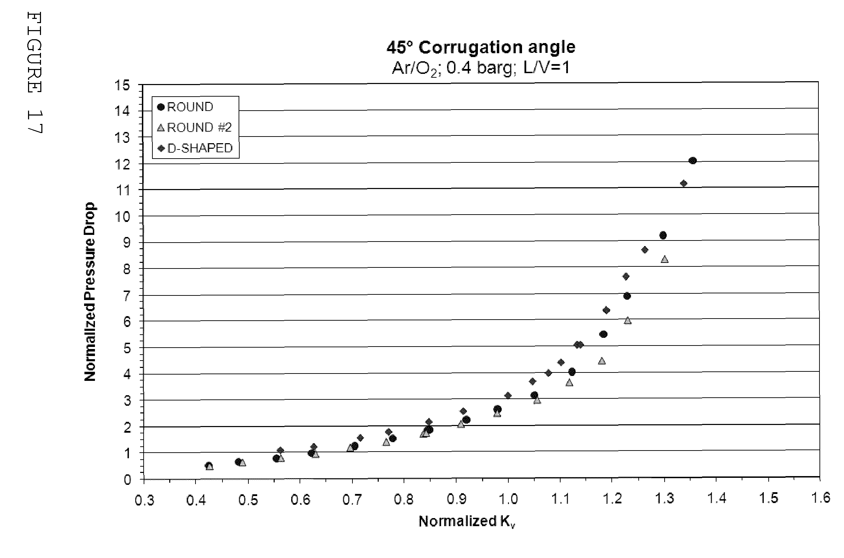

The results obtained for the prior art structured packing A in a column of circular cross-section and a column of semi-circular cross-section are shown in Figures 16 and 17. Two datasets are shown for circular cross-section columns (circular and triangular datapoints) and one for semi-circular cross-section columns (rhomboid datapoints). It can be seen from Figure 16 that the HETP value is higher by around 30-50% (depending on Kᵥ), and thus the separation efficiency is lower, for this packing in a semi-circular cross-section column compared with a column of circular cross-section. The curves begin to converge at a normalised Kᵥ of around 1.35, at which point both curves begin to show a steep increase of HETP with increasing Kᵥ, which latter observation implies that the operating capacity is similar for both the columns used. Figure 17 shows that the pressure drop of packing A is similar in both column types used. In addition, the loading point of both columns, which in this case is defined as the Kᵥ at which the pressure drop increase becomes more rapid with further incremental increases in Kᵥ, are similar at a Kᵥ of 1.05.

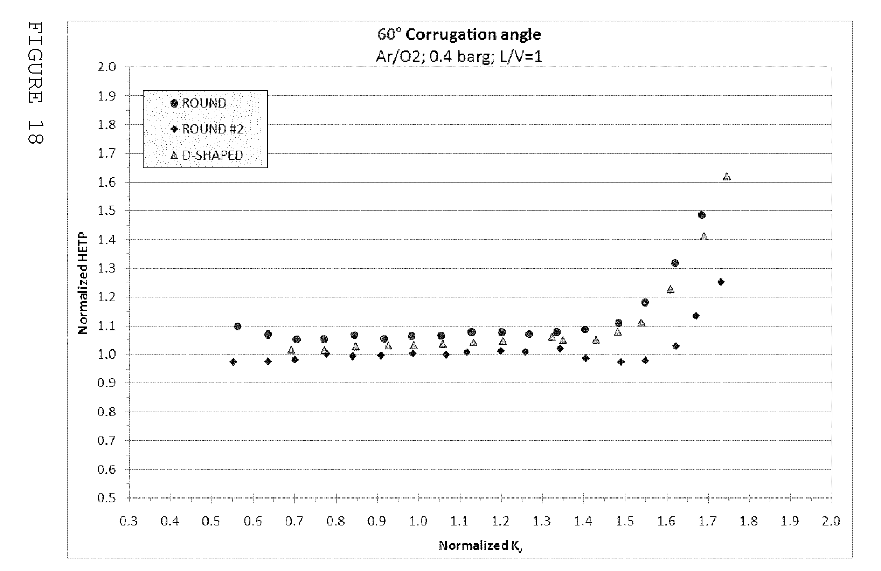

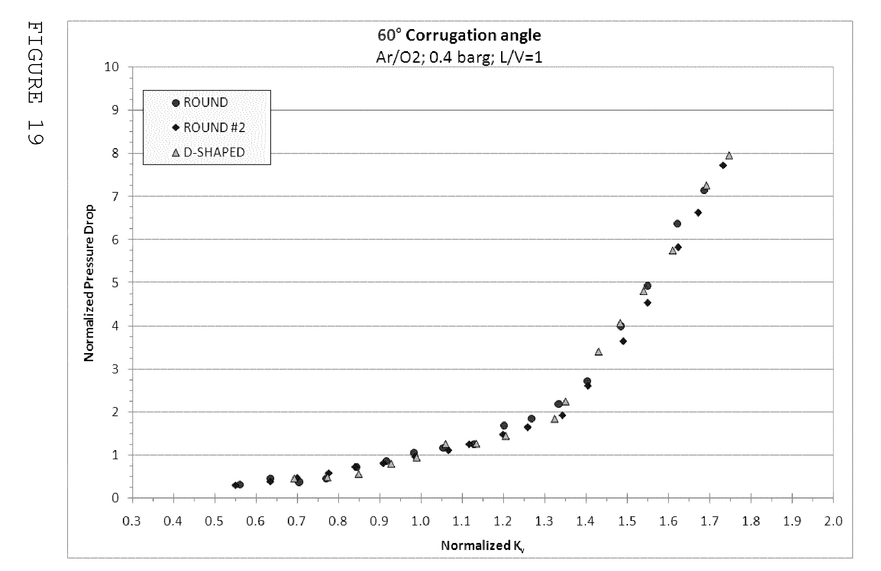

The results obtained for the structured packing B according to the present invention are shown in Figures 18 and 19. Again, two datasets are shown for circular cross-section columns (in this case, circular and rhomboid datapoints) and one for semi-circular cross-section columns (triangular datapoints). It can be seen from Figure 18 that a structured packing B with a corrugation angle of 60° (compared to 45° for the prior art packing A) unexpectedly does not show a significant increase in HETP for the semi-circular cross-section column compared with the circular cross-section column (compare with Figure 16). In fact, the datapoints for the semi-circular column in general lie between the two sets of datapoints for the circular cross-section column. As for Figure 16, the HETP for all datasets starts to increase rapidly on increase of Kᵥ at a similar value, so again it can be inferred that the operating capacity for the packing is similar for both column types used. Figure 19 shows, similarly to Figure 17, that the pressure drop of the packing and the loading point of the packing is similar in both column types used.

An overall comparison of the performance of the two packings in the two column types is presented in Table 1 in terms of relative HETP and relative operating capacity. The relative HETPs are representative of the HETPs along the flatter parts of the curves in Figures 16 and 18, prior to the rapid increase in HETP at higher Kᵥ. Relative operating capacities are evaluated at the Kᵥ at which the HETPs start to converge.

**Table 1**

| | Corrugation Angle (°) | Relative HETP (semi-circular/circular) | Relative operating capacity (semi-circular/circular) |
|---|---|---|---|
| Packing A | 45 | 1.3-1.5 | 1.0 |
| Packing B | 60 | 1.0 | 1.0 |

Thus, it can be seen that the operating capacity of Packing A is similar in both the semi-circular and circular cross-section column. The operating capacity of Packing B is also similar in both the semi-circular and circular cross-section column, although higher than Packing A. The higher corrugation angle structured packing B also provides a similar separation efficiency in both the semi-circular and circular cross-section column, whereas Packing A loses separation efficiency in the semi-circular cross-section column. Thus, use of packing B in semi-circular columns permits use of a lower column height than would otherwise be expected if the relative HETP was the same as Packing A, and thus use of Packing B provides a more cost-effective trade-off of height versus operating capacity than use of packing A.

Whilst the invention has been described with reference to a preferred embodiment, it will be appreciated that various modifications are possible within the scope of the invention.

In this specification, unless expressly otherwise indicated, the word 'or' is used in the sense of an operator that returns a true value when either or both of the stated conditions is met, as opposed to the operator 'exclusive or' which requires that only one of the conditions is met. The word 'comprising' is used in the sense of 'including' rather than in to mean 'consisting of'.

## Claims

1. The use in a cryogenic separation process of structured packing having a corrugation angle of at least 50° in a column or column division having at least one pair of converging walls or wall portions within at least a region of the column or column division bounded by at least one pair of converging walls or wall portions.

2. An apparatus for a cryogenic separation process, comprising a column or column division having at least one pair of converging walls or wall portions and, within at least a region of the column or column division bounded by at least one pair of converging walls or wall portions, a structured packing having a corrugation angle of at least 50°.

3. A method of cryogenic separation, comprising supplying one or more fluids to a column or column division having at least one pair of converging walls or wall portions and which, within at least a region of the column or column division bounded by at least one pair of converging walls or wall portions, contains a structured packing having a corrugation angle of at least 50° such that the one or more fluids contact the structured packing in order to effect cryogenic separation.

4. A method of installation of structured packing into an apparatus for a cryogenic separation process, which apparatus comprises a column or column division having at least one pair of converging walls or wall portions, comprising the steps of:
providing a structured packing having a corrugation angle of at least 50°, and
installing the said structured packing into at least a region of the column or column division bounded by at least one pair of converging walls or wall portions.

5. The use, apparatus or method according to any preceding claim, wherein the corrugation angle of the structured packing is from 55° to 65°.

6. The use, apparatus or method according to claim 5,
wherein the corrugation angle of the structured packing is 60°.

7. The use, apparatus or method according to any preceding claim, wherein the at least one pair of converging walls or wall portions converges towards an internal angle of less than or equal to 120 °.

8. The use, apparatus or method according to any preceding claim, in which the column cross-section or column division cross-section comprises at least one corner or angle.

9. The use, apparatus or method according to claim 8,
wherein the at least one corner or angle is an internal angle of less than or equal to 120°.

10. The use, apparatus or method according to any preceding claim, in which the column or column division is a column division formed within a column having a circular cross-section by providing at least one dividing wall within the column which divides the cross-section of the column into at least two divisions such that the dividing wall converges with the wall of the column to form at least one angle.

11. The use, apparatus or method according to any preceding claim, wherein the column size is greater than 0.5 m in diameter, where the column is of circular cross-section, or of greater than the equivalent cross-sectional area where the cross-section is of another shape.

12. The use, apparatus or method according to any preceding claim, in which the cryogenic separation process is a process of separation of air into nitrogen-, oxygen- and argon-enriched streams.

13. The use, apparatus or method according to any preceding claim, wherein the structured packing has a surface area density of from 350 to 800 m²/m³.

## Patentansprüche

1. Verwendung in einem kryogenen Trennverfahren von einer strukturierten Packung, die einen Riffelungswinkel von mindestens 50° hat, in einer Kolonne oder einem Kolonnenteilbereich, die/der mindestens ein Paar sich annähernder Wände oder Wandteile innerhalb mindestens eines Bereichs der Kolonne oder des Kolonnenteilbereichs aufweist, der durch mindestens ein Paar sich annähernder Wände oder Wandteile begrenzt wird.

2. Vorrichtung für ein kryogenes Trennverfahren, die eine Kolonne oder einen Kolonnenteilbereich, die/der mindestens ein Paar sich annähernder Wände oder Wandteile aufweist, und innerhalb mindestens eines Bereichs der Kolonne oder des Kolonnenteilbereichs, der durch mindestens ein Paar sich annähernder Wände oder Wandteile begrenzt wird, eine strukturierte Packung umfasst, die einen Riffelungswinkel von mindestens 50° hat.

3. Kryogenes Trennverfahren, umfassend das Zuführen von ein oder mehreren Fluiden zu einer Kolonne oder einem Kolonnenteilbereich, die/der mindestens ein Paar sich annähernder Wände oder Wandteile aufweist und die/der innerhalb mindestens eines Bereichs der Kolonne oder des Kolonnenteilbereichs, der durch mindestens ein Paar sich annähernder Wände oder Wandteile begrenzt wird, eine strukturierte Packung enthält, die einen Riffelungswinkel von mindestens 50° hat, sodass die ein oder mehreren Fluide mit der strukturierten Packung in Kontakt treten, um eine kryogene Trennung zu bewirken.

4. Verfahren zur Installation einer strukturierten Packung in einer Vorrichtung für ein kryogenes Trennverfahren, wobei die Vorrichtung eine Kolonne oder einen Kolonnenteilbereich aufweist, der mindestens ein Paar sich annähernder Wände oder Wandteile aufweist, wobei das Verfahren die folgenden Schritte umfasst:
Bereitstellen einer strukturierten Packung, die einen Riffelungswinkel von mindestens 50° hat, und
Installieren der strukturierten Packung in mindestens einem Bereich der Kolonne oder des Kolonnenteilbereichs, der durch mindestens ein Paar sich annähernder Wände oder Wandteile begrenzt wird.

5. Verwendung, Vorrichtung oder Verfahren nach einem der vorhergehenden Ansprüche, wobei der Riffelungswinkel der strukturierten Packung 55° bis 65° beträgt.

6. Verwendung, Vorrichtung oder Verfahren nach Anspruch 5, wobei der Riffelungswinkel der strukturierten Packung 60° beträgt.

7. Verwendung, Vorrichtung oder Verfahren nach einem der vorhergehenden Ansprüche, wobei das mindestens eine Paar sich annähernder Wände oder Wandteile sich in Richtung eines Innenwinkels von weniger oder gleich 120° annähert.

8. Verwendung, Vorrichtung oder Verfahren nach einem der vorhergehenden Ansprüche, wobei der Kolonnenquerschnitt oder der Kolonnenteilbereichsquerschnitt mindestens eine Ecke oder mindestens einen Winkel umfasst.

9. Verwendung, Vorrichtung oder Verfahren nach Anspruch 8, wobei die mindestens eine Ecke oder der mindestens eine Winkel ein Innenwinkel von weniger oder gleich 120° ist.

10. Verwendung, Vorrichtung oder Verfahren nach einem der vorhergehenden Ansprüche, wobei die Kolonne oder der Kolonnenteilbereich ein Kolonnenteilbereich ist, der innerhalb einer Kolonne ausgebildet ist, die einen kreisförmigen Querschnitt hat, und zwar indem mindestens eine Trennwand innerhalb der Kolonne bereitgestellt ist, die den Querschnitt der Kolonne derart in mindestens zwei Teilbereiche aufteilt, dass sich die Trennwand der Wand der Kolonne annähert, um mindestens einen Winkel zu bilden.

11. Verwendung, Vorrichtung oder Verfahren nach einem der vorhergehenden Ansprüche, wobei die Kolonnengröße größer als 0,5 m im Durchmesser ist, wenn die Kolonne einen kreisförmigen Querschnitt hat, oder sie größer als der äquivalente Querschnittsbereich ist, wenn der Querschnitt eine andere Form hat.

12. Verwendung, Vorrichtung oder Verfahren nach einem der vorhergehenden Ansprüche, wobei das kryogene Trennverfahren ein Verfahren zur Trennung von Luft in stickstoffangereicherte, sauerstoffangereicherte und argonangereicherte Ströme ist.

13. Verwendung, Vorrichtung oder Verfahren nach einem der vorhergehenden Ansprüche, wobei die strukturierte Packung eine Oberflächendichte von 350 bis 800 m²/m³ hat.

## Revendications

1. Utilisation dans un procédé de séparation cryogénique de garnissage structuré ayant un angle d'ondulation d'au moins 50° dans une colonne ou division de colonne ayant au moins une paire de parois ou parties de paroi convergentes au sein d'au moins une région de la colonne ou de la division de colonne délimitée par au moins une paire de parois ou de parties de paroi convergentes.

2. Appareil pour un processus de séparation cryogénique, comprenant une colonne ou division de colonne ayant au moins une paire de parois ou de parties de paroi convergentes et, au sein d'au moins une région de la colonne ou de la division de colonne délimitée par au moins une paire de parois ou de parties de paroi convergentes, un garnissage structuré ayant un angle d'ondulation d'au moins 50°.

3. Procédé de séparation cryogénique, comprenant la fourniture d'un ou plusieurs fluides à une colonne ou division de colonne ayant au moins une paire de parois ou de parties de paroi convergentes et qui, au sein d'au moins une région de la colonne ou de la division de colonne délimitée par au moins une paire de parois ou de parties de paroi convergentes, contient un garnissage structuré ayant un angle d'ondulation d'au moins 50° de telle sorte que le ou les fluides entrent en contact avec le garnissage structuré afin d'effectuer la séparation cryogénique.

4. Procédé d'installation de garnissage structuré dans un appareil pour un processus de séparation cryogénique, lequel appareil comprend une colonne ou division de colonne ayant au moins une paire de parois ou de parties de paroi convergentes, comprenant les étapes suivantes :
la fourniture d'un garnissage structuré ayant un angle d'ondulation d'au moins 50°, et
l'installation dudit garnissage structuré dans au moins une région de la colonne ou de la division de colonne délimitée par au moins une paire de parois ou de parties de paroi convergentes.

5. Utilisation, appareil ou procédé selon l'une quelconque des revendications précédentes, dans lesquels l'angle d'ondulation du garnissage structuré va de 55° à 65°.

6. Utilisation, appareil ou procédé selon la revendication 5, dans lesquels l'angle d'ondulation du garnissage structuré est de 60°.

7. Utilisation, appareil ou procédé selon l'une quelconque des revendications précédentes, dans lesquels l'au moins une paire de parois ou de parties de paroi convergentes converge vers un angle interne inférieur ou égal à 120°.

8. Utilisation, appareil ou procédé selon l'une quelconque des revendications précédentes, dans lesquels la section transversale de la colonne ou la section transversale de la division de colonne comprend au moins un coin ou angle.

9. Utilisation, appareil ou procédé selon la revendication 8, dans lesquels l'au moins un coin ou angle est un angle interne inférieur ou égal à 120°.

10. Utilisation, appareil ou procédé selon l'une quelconque des revendications précédentes, dans lesquels la colonne ou la division de colonne est une division de colonne formée à l'intérieur d'une colonne ayant une section transversale circulaire par fourniture d'au moins une paroi de séparation à l'intérieur de la colonne qui divise la section transversale de la colonne en au moins deux divisions de telle sorte que la paroi de séparation converge avec la paroi de la colonne pour former au moins un angle.

11. Utilisation, appareil ou procédé selon l'une quelconque des revendications précédentes, dans lesquels la taille de la colonne est supérieure à 0,5 m de diamètre, lorsque la colonne est de section transversale circulaire ou supérieure à la surface de section transversale équivalente lorsque la section transversale a une autre forme.

12. Utilisation, appareil ou procédé selon l'une quelconque des revendications précédentes, dans lesquels le processus de séparation cryogénique est un processus de séparation d'air en flux enrichis en azote, en oxygène et en argon.

13. Utilisation, appareil ou procédé selon l'une quelconque des revendications précédentes, dans lesquels le garnissage structuré a une densité surfacique de 350 à 800 m²/m³.
